# EUROPÄISCHE PATENTSCHRIFT

(11) **EP 1 223 441 B1**
(45) Veröffentlichungstag und Bekanntmachung des Hinweises auf die Patenterteilung: **06.04.2005**
(21) Anmeldenummer: 01126252.4
(22) Anmeldetag: 06.11.2001
(51) Int. Cl.: G02B 6/255

(54) **Vorrichtung zum Herstellen einer nicht lösbaren Verbindung zwischen wenigstens zwei Lichtwellenleitern, insbesondere eines Schmelzspleisses**
Apparatus to produce a non releasable connection between at least two optical waveguides, in particular of a fusion splice
Appareil pour la fabrication d'une connection pas amovible entre au moins deux guides d'ondes optiques, en particulier une épissure par fusion

(30) Priorität: 09.01.2001 DE 10100566
(43) Veröffentlichungstag der Anmeldung: 17.07.2002
(73) Patentinhaber: CCS Technology, Inc., Wilmington, DE 19803 (US)
(72) Erfinder: Zamzow, Bert, 44795 Bochum (DE)
(74) Vertreter: Epping, Hermann, Fischer

(56) Entgegenhaltungen:
- EP-A- 0 720 032
- US-A- 5 002 351

## Beschreibung

Die Erfindung betrifft eine Vorrichtung zum Herstellen einer nichtlösbaren Verbindung zwischen wenigstens zwei Lichtwellenleitern, insbesondere eines Schmelzspleißes, mit einem Gestell, an dem eine die Enden wenigstens zweier miteinander zu verbindenden Lichtwellenleiter an einer Fügestelle zueinander ausrichtende Führung und Mittel zum Verbinden der Lichtwellenleiter im Bereich der Fügestelle angeordnet sind, und mit wenigstens einer bewegbar ausgebildeten Haube, mit der das Gestell zumindest im Bereich der Fügestelle abdeckbar ist.

Für die Übertragung von Daten werden zunehmend Lichtwellenleiter (LWL) eingesetzt. Die in der Regel aus Glasfaser oder Kunststoff bestehenden Lichtwellenleiter sind weitgehend unempfindlich gegenüber elektromagnetischen Störungen und zeichnen sich zudem durch sehr hohe Übertragungsraten von bis zu mehreren Gbit/s aus. Im Vergleich mit etwa herkömmlichen Kupferleitungen sind Lichtwellenleiter darüber hinaus kostengünstiger herzustellen, weitgehend abhörsicher und ohne aufwendige Schutzmaßnahmen auch für explosionsgefährdete Umgebungen geeignet.

Daten, die bislang in der Regel als elektrisches Signal vorliegen, werden für die Übertragung mittels eines Lichtwellenleiters durch einen optischen Sender, etwa eine Laser- oder eine Leuchtdiode, in ein optisches Signal umgewandelt, das in den Lichtwellenleiter eingekoppelt wird. Ein so mit den zu übertragenden Daten modulierter Lichtstrahl nimmt seinen Weg durch den Lichtwellenleiter, indem er an der Grenzfläche zwischen einem inneren Kernglas und einem dieses konzentrisch umgebenden, mit einer niedrigeren optischen Dichte versehenen Mantelglas total reflektiert wird. Voraussetzung hierfür ist, daß der Lichtstrahl unterhalb eines bestimmten Winkels, dem Akzeptanzwinkel, in den Lichtwellenleiter eingekoppelt wird. Der Lichtstrahl folgt durch diese Totalreflexion auch Krümmungen des Lichtwellenleiters. Im Anschluß an die Übertragung des optischen Signals durch den Lichtwellenleiter wird dieses zur Weiterverarbeitung mittels eines Empfängers, beispielsweise eine Fotodiode oder ein Fototransistor, wieder in ein elektrisches Signal umgewandelt.

Nach der Art der Führung eines Lichtstrahls im Kernglas lassen sich die Lichtwellenleiter in Singlemodefasern (Einmodenfaser) und Multimodefasern unterteilen. Bei Singlemodefasern liegt der Durchmesser des Kernglas in der Größenordnung der Wellenlänge des Lichts, so daß sich nur eine einzige Mode im Kernglas ausbreiten kann, wobei bedingt durch die Güte eines optischen Sender auch diese eine spektrale Breite aufweist. Bei Multimodefasern hingegen tragen mehrere diskrete Moden, die sich vornehmlich in der Feldverteilung und der wellenlängenabhängigen Ausbreitungsgeschwindigkeit unterscheiden, zur Signalübertragung bei. Je nach Art der Ausgestaltung der Brechzahl des Kernglas lassen sich die Multimodefasern in Stufenprofilfasern, bei denen Kernglas und Mantelglas eine konstante Brechzahl aufweisen, und Gradientenprofilfasern, bei denen die Brechzahl des Kernglas zu dem Mantelglas hin parabelförmig abnimmt, unterteilen. Insbesondere bei Stufenprofilfasern ergeben sich Laufzeitunterschiede der einzelnen Moden, die zu einer Verbreiterung des Lichtimpulses, die sogenannte Modendispersion, führen, die meist zusammen mit einer chromatischen Dispersion die Bandbreite des Lichtwellenleiters beschränkt.

Das Übertragungsvermögen eines Lichtwellenleiters ist neben der durch die Dispersion beeinflußten Bandbreite hauptsächlich durch die wellenlängenabhängige Dämpfung, das heißt den Energieverlust des Lichtstrahls im Verlauf einer Übertragungsstrecke gekennzeichnet. Ursächlich für die Dämpfung können zahlreiche Einflußfaktoren sein, zum Beispiel Fehlerstellen wie etwa Luftblasen, Einschlüsse, Mikrorisse oder Inhomogenitäten, die eine Absorption und Streuung des Lichtstrahls hervorrufen. Vor allem bei der Verbindung zweier Lichtwellenleiter können Fehler, wie beispielsweise durch Reflexionen an der Grenzfläche Lichtwellenleiter-Luft auftretende Fresnelverluste, vorkommen, die eine hohe Dämpfung verursachen.

Um dies zu vermeiden sind die üblicherweise zur Verbindung zweier Lichtwellenleiter verwendeten Steckverbinder aufwendig ausgestaltet. Bei einfachen Anwendungen, zum Beispiel dem Aneinanderreihen von Lichtwellenleiter für die Bildung langer Leitungen oder dem Reparieren von Kabelbrüchen, finden daher häufig Spleiße Anwendung, bei denen es sich um nichtlösbare Verbindungen zwischen zwei Lichtwellenleitern handelt. Die sich durch eine geringe Dämpfung auszeichnenden Spleiße können als mechanischer beziehungsweise Crimpspleiß, als Klebespleiß oder als Schmelzbeziehungsweise Fusionsspleiß ausgebildet sein.

Beim mechanischen Spleiß werden die Enden zweier Lichtwellenleiter durch Pressen oder Crimpen zusammengehalten, wohingegen beim Klebespleiß an der Fügestelle zwischen den sich gegenüberliegenden Enden zweier Lichtwellenleiter ein Klebstoff eingeführt wird, dessen Brechungsindex dem des Kernglases der Lichtwellenleiter entspricht. Der mechanische Spleiß und der Klebespleiß haben vergleichbare Dämpfungswerte und können mühelos vor Ort angewandt werden. Nicht zuletzt aufgrund seiner geringen Dämpfungswerte ist der Schmelz- oder Fusionsspleiß, bei dem die Enden zweier Lichtwellenleiter oder Lichtwellenleitergruppen zueinander ausgerichtet und durch Erwärmen miteinander verschweißt werden, weit verbreitet. Als Wärmequellen werden in der Praxis vor allem eine Wasserstofflamme, eine Funkenstrecke oder ein Laser eingesetzt.

Bekannte Vorrichtungen für die Herstellung einer nichtlösbaren Verbindung zwischen zwei Lichtwellenleitern weisen eine die Enden zweier Lichtwellenleiter an einer Fügestelle zueinander ausrichtende Führung und Mittel zum Verbinden der Lichtwellenleiter im Bereich dieser Fügestelle auf. Um während des Verbindens einerseits das Bedienpersonal zu schützen, beispielsweise vor einer beim Schmelzsspleiß eingesetzten Wärmequelle, und andererseits die exakt zueinander zu positionierenden Lichtwellenleiter gegen äußere Einflüsse, wie etwa Wind, Staub oder Erschütterungen, abzuschirmen, wird die Fügestelle durch eine Haube abgedeckt. Die Bildung des Spleißes findet dann bei auf die Fügestelle aufgesetzter Haube statt und wird gewöhnlich durch die manuelle Betätigung einer Taste ausgelöst, nachdem zuvor durch einen Sensor das Aufsetzen der Haube auf der Fügestelle festgestellt worden ist.

Insbesondere bei dem Einsatz einer solchen Vorrichtung für die Massenfertigung von durch Spleiße miteinander verbundenen Lichtwellenleiter hat sich die jeweilige manuelle Betätigung der Taste als störend herausgestellt. Grund hierfür ist, dass zum einen sich durch die häufige Betätigung die Verschleißanfälligkeit erhöht und zum anderen ein in der Summe nicht vernachlässigbarer, die Produktivität beeinträchtigender Zeitverlust entsteht. Ein weiterer Nachteil besteht darin, dass die Bedienung einer solchen Vorrichtung in ergonomischer Hinsicht ungünstig und für eine Automatisierung nicht besonders geeignet ist. Darüber hinaus ist die manuelle Betätigung der Taste mit einer unansehnlichen Verschmutzung der Vorrichtung verbunden. Denn häufig als Bündelader oder Hohlader ausgebildeten Lichtwellenleiterkabel sind in der Regel mit einem zwischen einer Hülle und den einzelnen Lichtwellenleitern vorhandenen gelartigen Füllmasse versehen, die beim Vorbereiten der Enden der miteinander zu verbindenden Lichtwellenleiter, beispielsweise bei einem unvermeidlichen Entfernen des Kabelmantels, austreten und an den Händen eines Monteurs haften kann, wodurch sie auf die Taste übertragen wird und diese verschmutzt.

In der EP-A-0 720 032 ist ein Spleißgerät beschrieben, welches einen mit einer Haube verbundenen ersten Schalter aufweist, der festlegt, ob eine Entladung über die Elektroden gestartet werden kann oder nicht. Darüber hinaus ist ein zweiter Schalter vorgesehen, über den der Entladevorgang schließlich eingeschaltet wird. Der zweite Schalter allerdings ermöglicht das Einschalten einer Entladung nur dann, wenn die Haube die Entladungselektroden bedeckt und der erste Schalter eingeschaltet ist. Wenn die Haube die Entladungselektrode nicht bedeckt und der erste Schalter ausgeschaltet ist, ist ein Einschalten der Entladung über den zweiten Schalter nicht möglich.

In der US-A-5 002 351 ist ein Spleißgerät beschrieben, das durch die Betätigung eines Hauptschalters zum Spleißen vorbereitet werden kann.

Der Erfindung liegt die Aufgabe zugrunde, eine Vorrichtung zum Herstellen einer nichtlösbaren Verbindung zwischen wenigstens zwei Lichtwellenleitern dahingehend weiterzubilden, dass sich eine vergleichsweise einfache und schnelle Bedienung erzielen lässt.

Diese Aufgabe wird gelöst durch eine Vorrichtung zum Herstellen einer nicht lösbaren Verbindung zwischen wenigstens zwei Lichtwellenleiter, insbesondere eines Schmelzspleißes, mit: einem Gestell, an dem eine Führung angeordnet ist, um die Enden wenigstens zweier miteinander zu verbindender Lichtwellenleiter an einer Fügestelle zueinander auszurichten, und an dem Mittel zum Verbinden der Lichtwellenleiter im Bereich der Fügestelle durch einen Spleißprozeß angeordnet sind; wenigstens einer bewegbar ausgebildeten Haube mit der das Gestell zumindest im Bereich der Fügestelle abdeckbar ist; einem Schalter, der durch die Haube betätigbar ist und durch den die Mittel zum Verbinden der Lichtwellenleiter derart schaltbar sind, daß sie in einer ersten Stellung der Haube eingeschaltet und in einer zweiten Stellung der Haube ausgeschaltet sind; wobei durch die Bewegung der Haube ein selbsttätiges Starten des Spleißprozesses bewirkt wird.

Eine solche Ausgestaltung macht sich die Erkenntnis zu eigen, dass sich eine vergleichsweise einfache und schnelle Bedienung dann erreichen lässt, wenn die Bewegung der Haube mit der Betätigung eines die Mittel zum Verbinden der Lichtwellenleiter im Bereich der Fügestelle auslösenden Schalters gekoppelt wird. Auf diese Weise ergibt sich ein selbsttätiges Ein- und Ausschalten der vorgenannten Mittel allein aufgrund der ohnehin vorhandenen und unerläßlichen Bewegung der Haube. Dies hat zur Folge, daß eine manuelle Betätigung einer Taste und damit diese selbst entbehrlich wird. Die erfindungsgemäße Vorrichtung eignet sich damit in besonderem Maße für eine automatisierte Massenfertigung und trägt zu einer vergleichsweise säuberlichen Arbeitsumgebung bei. Nicht zuletzt ist es mit der vorliegenden Erfindung möglich, eine Vorrichtung zum Herstellen einer nichtlösbaren Verbindung zwischen zwei Lichtwellenleitern zu schaffen, die an und für sich ohne irgendwelche Bedienelemente auskommt oder bei der sich eventuell vorhandene Bedienelemente ohne weiteres sperren lassen, um etwa der Gefahr eines durch ungeschultes Bedienpersonal verursachten Mißbrauchs zu begegnen.

Zweckmäßigerweise ist das Gestell in der ersten Stellung der Haube durch diese zumindest im Bereich der Fügestelle abgedeckt. Bei einer solchen Ausgestaltung läßt sich sicherstellen, daß die in der ersten Stellung der Haube eingeschalteten Mittel zum Verbinden der Lichtwellenleiter ausschließlich bei die Fügestelle abschirmender Haube aktiviert werden und daß die Mittel zum Verbinden der Lichtwellenleiter bei freigelegter Fügestelle, soll heißen geöffneter Haube, etwa zum Einlegen neuer Lichtwellenleiter, stets deaktiviert sind. Zweckmäßig ist ferner, den Schalter mit einem die Stellung der Haube detektierenden Sensor zu koppeln, so daß eine präzise Betätigung gewährleistet ist. Eine solche Einrichtung kann beispielsweise ein Endschalter sein, der bei auf der Fügestelle aufsitzender Haube angesprochen wird und oftmals bei bekannten Vorrichtungen aus Sicherheitsgründen ohnehin vorhanden ist.

Um einen Schmelz- oder Fusionsspleiß zu bilden, ist es überdies von Vorteil, wenn durch die Mittel zum Verbinden der Lichtwellenleiter eine die Lichtwellenleiter miteinander verschweißende Wärme erzeugbar ist. Zu diesem Zweck hat es sich außerdem als vorteilhaft herausgestellt, wenn die Mittel zum Verbinden der Lichtwellenleiter wenigstens zwei Elektroden im Bereich der Fügestelle aufweisen, mit denen ein elektrischer Lichtbogen zum Verschweißen der Lichtwellenleiter erzeugbar ist. Diese sogenannte Lichtbogen-Spleißtechnik ermöglicht auf zuverlässige Weise das Verschweißen der Lichtwellenleiter im elektrischen Lichtbogen bei Temperaturen von etwa 2000 °K. Von Vorteil ist in diesem Zusammenhang zudem, die Elektroden beidseitig der Führung anzuordnen, so daß eine einfache und vor allem wartungsgerechte Anordnung gewährleistet ist.

Um die Enden der Lichtwellenleiter zuverlässig zusammenzuführen, ist in einer bevorzugten Ausgestaltung der vorliegenden Erfindung die Führung mit wenigstens einer Nut, die vorzugsweise einen V-förmigen Querschnitt aufweist, versehen oder als 3-Punkt-Lagerung ausgebildet.

In einer vorteilhaften Weiterbildung der erfindungsgemäßen Vorrichtung ist die Haube verschwenkbar an dem Gestell angeordnet. Auf diese Weise ergibt sich eine Verschwenkbewegung der Haube zwischen ihrer geöffneten und geschlossenen Stellung, durch die sich in konstruktiv einfacher Weise eine Betätigung des Schalters realisieren läßt. Vorteilhafterweise sind hierfür die Haube und der Schalter durch ein mechanisches Gestänge, vorzugsweise einen Hebel, miteinander gekoppelt, so daß sich eine in wirtschaftlicher Hinsicht kostengünstige Ausgestaltung ergibt.

In Weiterbildung der erfindungsgemäßen Vorrichtung werden weiterhin Mittel zum Aufheben der Funktion des Schalters vorgeschlagen, um eine spezifische Anpassung der Vorrichtung an betriebliche Erfordernisse oder personelle Eigenheiten zu ermöglichen. In Hinsicht auf eine einfache Bedienung wird schließlich vorgeschlagen, daß die Mittel zum Aufheben der Funktion des Schalters eine manuell zu betätigende Taste aufweisen.

Einzelheiten und weitere Vorteile des Gegenstandes der vorliegenden Erfindung ergeben sich aus der nachfolgenden Beschreibung eines bevorzugten Ausführungsbeispieles. In der zugehörigen Zeichnung veranschaulichen im einzelnen:
- Fig. 1: eine schematische Darstellung der erfindungsgemäßen Vorrichtung mit einer sich in einer geöffneten Stellung befindenden Haube und
- Fig. 2: eine Darstellung gemäß Fig. 1 mit der sich in einer geschlossenen Stellung befindenden Haube.

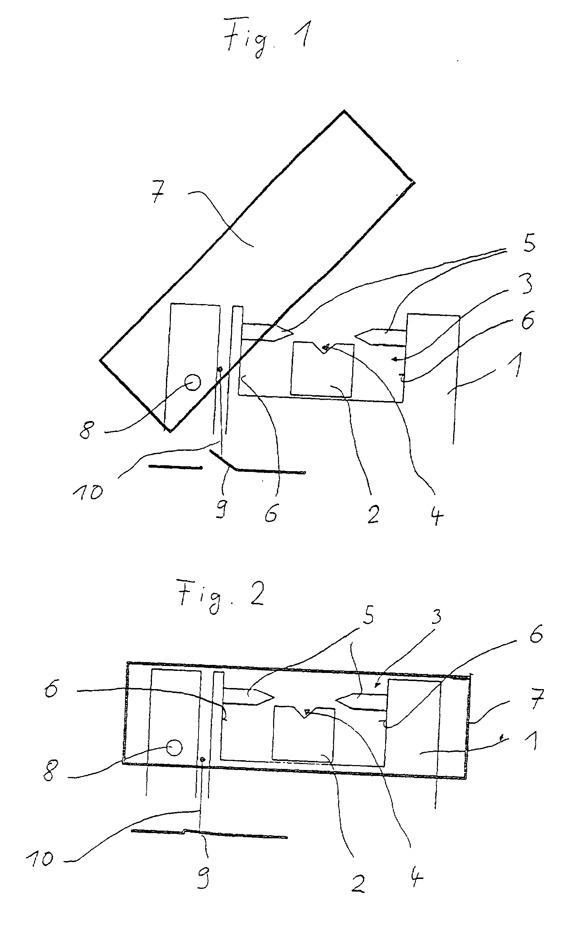

In Fig. 1 ist eine Vorrichtung zum Herstellen einer nichtlösbaren Verbindung zwischen zwei Lichtwellenleitern in Form eines Schmelzspleißes dargestellt. Zu erkennen ist ein im Querschnitt U-förmiges Gestell 1, an dem eine die Enden zweier miteinander zu verbindenden Lichtwellenleiter an einer Fügestelle zueinander ausrichtende Führung 2 angeordnet ist. Die Führung 2 befindet sich in einer Vertiefung 3 des Gestells 1 und ist mit einer Nut 4 versehen, die einen V-förmigen Querschnitt aufweist und damit ein zuverlässiges Zusammenzuführen der Enden der Lichtwellenleiter gestattet. Beidseitig der Führung 2 sind Elektroden 5 im Bereich der Fügestelle angeordnet, mit denen eine die Lichtwellenleiter miteinander verschweißende Wärme in Form eines Lichtbogens erzeugbar ist. Die Elektroden 5 sind an einander gegenüberliegenden Innenflächen 6 von im Bereich der Vertiefung 3 ausgebildeten Seitenwandungen des Gestells 1 angeordnet.

Eine Haube 7 ist durch ein Drehgelenk 8 zwischen einer geöffneten Stellung und einer geschlossenen Stellung verschwenkbar an dem Gestell 1 angeordnet. In der in Fig. 2 gezeigten, geschlossenen Stellung der Haube 7 wird das Gestell 1 durch die Haube 7 im Bereich der Fügestelle abgedeckt. Auf diese Weise ist die Fügestelle vor äußeren Einflüssen, wie etwa Wind, Erschütterungen und dergleichen, geschützt. Umgekehrt schirmt die Haube 7 in dieser ersten Stellung zugleich die Umgebung vor Wärme ab, die während der Bildung des Schmelzspleißes durch die Elektroden 5 erzeugt wird. In der in Fig. 1 gezeigten, geöffneten Stellung der Haube 7 wird das Gestell 1 im Bereich der Fügestelle freigelegt. In dieser Stellung lassen sich Lichtwellenleiter in die Führung 2 einlegen und die einander zugewandten Enden der Lichtwellenleiter zueinander ausrichten.

Wie die Fig. 1 und 2 ferner erkennen lassen, ist ein Schalter 9 bei geöffneter Haube 7 ausgeschaltet und bei geschlossener Haube 7 eingeschaltet. Der Schalter 9 ist durch einen Hebel 10 mit der Haube 7 verbunden. Dies hat zur Folge, daß der Schalter 9 beim Bewegen der Haube 7 in die erste, soll heißen geschlossene Stellung gleichfalls geschlossen wird. Der auf diese Weise durch die Haube 7 betätigte Schalter 9 dient dazu, den Spleißprozeß selbsttätig zu starten, das heißt die einzelnen Fasern exakt zu positionieren, die Elektroden 5 einzuschalten und die Spleißdämpfung zu bestimmen, wenn die Haube 7 die erste Stellung erreicht hat. Anstelle des durch den Hebel 10 mechanisch betätigten Schalters 9 kann auch ein sensorisch arbeitender Endschalter an dem Gestell 1 vorgesehen sein, der die geschlossene Stellung der Haube 7 feststellt und dann den Spleißprozeß startet.

Nach Beendigung des durch die aktivierten Elektroden 5 erzeugten Spleißvorgangs wird die Haube 7 zum Entnehmen der dann miteinander verbundenen Lichtwellenleiter geöffnet. Durch die Bewegung der Haube 7 von der ersten Stellung weg in eine zweite Stellung wird über den Hebel 10 zugleich der Schalter 9 betätigt, wodurch die Elektroden 5 deaktiviert werden und der Spleißprozeß beendet wird. Die Haube 7 läßt sich daher öffnen, ohne Gefahr zu laufen, daß etwa das Bedienpersonal durch die von den Elektroden 5 während des Spleißvorgangs erzeugte Wärme oder die hohe elektrische Spannung beeinträchtigt wird. Das Gleiche gilt dann, wenn anstelle des Hebels 10 ein sensorisch arbeitender Endschalter vorgesehen ist, der unverzüglich die Elektroden 5 ausschaltet und den Spleißprozeß beendet, wenn die Haube 7 die erste Stellung verläßt und bei Bewegung in Richtung auf die geschlossene Stellung eine zweite Stellung einnimmt.

Nicht dargestellt in der Zeichnung sind Mittel zum Aufheben der Funktion des Schalters 9, die fakultativ vorgesehen sein können, um eine spezifische Anpassung der Vorrichtung an betriebliche Erfordernisse oder personelle Eigenheiten zu ermöglichen.

Mit der zuvor beschriebenen Vorrichtung zum Herstellen einer nichtlösbaren Verbindung zwischen zwei Lichtwellenleitern in Form eines Schmelzspleißes läßt sich eine vergleichsweise einfache und schnelle Bedienung erzielen. Ursächlich hierfür ist vor allem das selbsttätige Starten und Beenden des Spleißprozesses, unter anderem das Ein- und Ausschalten der Elektroden 5, durch die Haube 7. Da im Unterschied zu herkömmlichen Vorrichtungen dieser Art eine manuell zu betätigende Taste zum Starten und Beenden des Spleißprozesses entbehrlich ist, wird durch die vorgenannte Vorrichtung nicht zuletzt auch einer ergonomischen und säuberlichen Handhabung Rechnung getragen.

### Bezugszeichenliste

- 1: Gestell
- 2: Führung
- 3: Vertiefung
- 4: Nut
- 5: Elektrode
- 6: Innenfläche
- 7: Haube
- 8: Drehgelenk
- 9: Schalter
- 10: Hebel

## Patentansprüche

1. Vorrichtung zum Herstellen einer nichtlösbaren Verbindung zwischen wenigstens zwei Lichtwellenleitern, insbesondere eines Schmelzspleißes, mit:
- einem Gestell (1), an dem eine Führung (2) angeordnet ist, um die Enden wenigstens zweier miteinander zu verbindender Lichtwellenleiter an einer Fügestelle zueinander auszurichten, und an dem Mittel (5) zum Verbinden der Lichtwellenleiter im Bereich der Fügestelle durch einen Spleißprozeß angeordnet sind;
- wenigstens einer bewegbar ausgebildeten Haube (7) mit der das Gestell (1) zumindest im Bereich der Fügestelle abdeckbar ist;
- einem Schalter (9), der durch die Haube (7) betätigbar ist und durch den die Mittel (5) zum Verbinden der Lichtwellenleiter derart schaltbar sind, daß sie in einer ersten Stellung der Haube (7) eingeschaltet und in einer zweiten Stellung der Haube (7) ausgeschaltet sind;
- wobei durch die Bewegung der Haube (7) ein selbsttätiges Starten des Spleißprozesses bewirkt wird.

2. Vorrichtung nach Anspruch 1,
**dadurch gekennzeichnet, dass**
das Gestell (1) in der ersten Stellung der Haube (7) durch diese zumindest im Bereich der Fügestelle abgedeckt ist.

3. Vorrichtung nach Anspruch 1 oder 2,
**dadurch gekennzeichnet, dass**
der Schalter (9) mit einem die Stellung der Haube (7) detektierenden Sensor gekoppelt ist.

4. Vorrichtung nach einem der Ansprüche 1 bis 3,
**dadurch gekennzeichnet, dass**
durch die Mittel (5) zum Verbinden der Lichtwellenleiter eine die Lichtwellenleiter miteinander verschweißende Wärme erzeugbar ist.

5. Vorrichtung nach Anspruch 4,
**dadurch gekennzeichnet, dass**
die Mittel zum Verbinden der Lichtwellenleiter wenigstens zwei Elektroden (5) im Bereich der Fügestelle aufweisen, mit denen ein elektrischer Lichtbogen zum Verschweißen der Lichtwellenleiter erzeugbar ist.

6. Vorrichtung nach Anspruch 5,
**dadurch gekennzeichnet, dass**
die Elektroden (5) beidseitig der Führung (2) angeordnet sind.

7. Vorrichtung nach einem der Ansprüche 1 bis 6,
**dadurch gekennzeichnet, dass**
die Führung (2) mit wenigstens einer Nut (4), die vorzugsweise einen V-förmigen Querschnitt aufweist, versehen oder als 3-Punkt-Lagerung ausgebildet ist.

8. Vorrichtung nach einem der Ansprüche 1 bis 7,
**dadurch gekennzeichnet, dass**
die Haube (7) verschwenkbar an dem Gestell (1) angeordnet ist.

9. Vorrichtung nach Anspruch 8,
**dadurch gekennzeichnet, dass**
die Haube (7) und der Schalter (9) durch ein mechanisches Gestänge, vorzugsweise einen Hebel (10), miteinander gekoppelt sind.

10. Vorrichtung nach einem der Ansprüche 1 bis 9,
**gekennzeichnet durch**
Mittel zum Aufheben der Funktion des Schalters (9).

11. Vorrichtung nach Anspruch 10,
**dadurch gekennzeichnet, dass**
die Mittel zum Aufheben der Funktion des Schalters (9) eine manuell zu betätigende Taste aufweisen.

12. Vorrichtung nach einem der Ansprüche 1 bis 11, die ausgebildet ist, daß das selbsttätige Starten des Spleißprozesses vermittels des Schalters (9) erfolgt.

13. Vorrichtung nach einem der Ansprüche 1 bis 12, die ausgebildet ist, daß beim Bewegen der Haube (7) der Schalter (9) geschlossen wird und daß durch die Betätigung des Schalters (9) der Spleißprozeß selbsttätig startet.

14. Vorrichtung nach einem der Ansprüche 1 bis 13, die ausgebildet ist, daß durch die Bewegung der Haube (7) von der ersten Stellung in die zweite Stellung der Spleißprozeß beendet wird.

15. Vorrichtung nach einem der Ansprüche 1 bis 14, die ausgebildet ist, daß allein durch die Bewegung der Haube ein selbsttätiges Ein- und Ausschalten der Mittel zum Verbinden der Lichtwellenleiter im Bereich der Fügestelle bewirkt wird.

## Claims

1. Apparatus for producing a non-releasable connection between at least two optical waveguides, in particular a fusion splice, having:
- a frame (1) , on which a guide (2) is arranged in order to align the ends of at least two optical waveguides that are to be connected to each other in relation to each other at a joint, and on which means (5) for connecting the optical waveguides in the region of the joint by a splicing process are arranged;
- at least one movably formed cap (7), with which the frame (1) can be covered at least in the region of the joint;
- a switch (9), which can be actuated by the cap (7) and by which the means (5) for connecting the optical waveguides can be switched in such a way that they are switched on in a first position of the cap (7) and are switched off in a second position of the cap (7);
- automatic starting of the splicing process being caused by the movement of the cap (7).

2. Apparatus according to Claim 1, **characterized in that**, in the first position of the cap (7), the frame (1) is covered by the latter, at least in the region of the joint.

3. Apparatus according to Claim 1 or 2, **characterized in that** the switch (9) is coupled with a sensor detecting the position of the cap (7).

4. Apparatus according to one of Claims 1 to 3, **characterized in that** heat fusing the optical waveguides to one another can be generated by the means (5) for connecting the optical waveguides.

5. Apparatus according to Claim 4, **characterized in that** the means for connecting the optical waveguides have at least two electrodes (5) in the region of the joint, with which an electric arc can be generated for fusing the optical waveguides.

6. Apparatus according to Claim 5, **characterized in that** the electrodes (5) are arranged on both sides of the guide (2).

7. Apparatus according to one of Claims 1 to 6, **characterized in that** the guide (2) is provided with at least one groove (4), which preferably has a V-shaped cross section, or is formed as a 3-point bearing.

8. Apparatus according to one of Claims 1 to 7, **characterized in that** the cap (7) is pivotably arranged on the frame (1).

9. Apparatus according to Claim 8, **characterized in that** the cap (7) and the switch (9) are coupled to one another by a mechanical linkage, preferably a lever (10).

10. Apparatus according to one of Claims 1 to 9, **characterized by** means for suspending the function of the switch (9).

11. Apparatus according to Claim 10, **characterized in that** the means for suspending the function of the switch (9) have a button to be manually actuated.

12. Apparatus according to one of Claims 1 to 11, which is formed in such a way that the automatic starting of the splicing process takes place by means of the switch (9).

13. Apparatus according to one of Claims 1 to 12, which is formed in such a way that, when the cap (7) moves, the switch (9) is closed and that the splicing process is automatically started by the movement of the switch (9).

14. Apparatus according to one of Claims 1 to 13, which is formed in such a way that the splicing process is ended by the movement of the cap (7) from the first position into the second position.

15. Apparatus according to one of Claims 1 to 14, which is formed in such a way that automatic switching on and off of the means for connecting the optical waveguides in the region of the joint is caused by the movement of the cap alone.

## Revendications

1. Dispositif pour réaliser une liaison inamovible fixe entre au moins deux guides d'ondes optiques, en particulier une épissure par fusion, comportant :
- un bâti (1), sur lequel est monté un bloc de guidage (2), pour orienter l'une par rapport à l'autre, au niveau d'un point d'assemblage, les extrémités d'au moins deux guides d'ondes optiques devant être reliés l'une à l'autre, et sur lequel sont montés des moyens (5), destinés à relier les guides d'ondes optiques dans la zone du point d'assemblage grâce à une opération d'épissage ;
- au moins un capot (7), conçu de façon à être mobile, à l'aide duquel le bâti (1) peut être recouvert au moins dans la zone du point d'assemblage ;
- un interrupteur (9), qui peut être manoeuvré par le capot (7), et grâce auquel il est possible de commuter les moyens (5) destinés à relier les guides d'ondes optiques, de façon qu'ils soient connectés dans une première position du capot (7), et soient déconnectés dans une deuxième position du capot (7) ;
- un déplacement de capot (7) provoquant ainsi un démarrage automatique de l'opération d'épissage.

2. Dispositif selon la revendication 1, **caractérisé en ce que** le bâti (1) est, dans la première position du capot (7), recouvert par ce dernier, au moins dans la zone du point d'assemblage.

3. Dispositif selon la revendication 1 ou 2, **caractérisé en ce que** l'interrupteur (9) est couplé à un capteur destiné à détecter la position du capot (7).

4. Dispositif selon l'une des revendications 1 à 3, **caractérisé en ce que**, par les moyens (5) destinés à relier les guides d'ondes optiques, il est possible de créer une chaleur destinée à souder les uns aux autres les guides d'ondes optiques.

5. Dispositif selon la revendication 4, **caractérisé en ce que** les moyens destinés à relier les guides d'ondes optiques comportent au moins deux électrodes (5) dans la zone du point d'assemblage, à l'aide desquelles il est possible de produire un arc électrique pour souder les guides d'ondes optiques.

6. Dispositif selon la revendication 5, **caractérisé en ce que** les électrodes (5) sont disposées des deux côtés du bloc de guidage (2).

7. Dispositif selon l'une des revendications 1 à 6, **caractérisé en ce que** le bloc de guidage (2) est pourvu d'au moins une encoche (4), qui de préférence a en section transversale la forme d'un V, ou est configurée comme un montage à 3 points.

8. Dispositif selon l'une des revendications 1 à 7, **caractérisé en ce que** le capot (7) est monté de façon à pouvoir pivoter sur le bâti (1).

9. Dispositif selon la revendication 8, **caractérisé en ce que** le capot (7) et l'interrupteur (9) sont couplés l'un à l'autre par une tringlerie mécanique, de préférence un levier (10).

10. Dispositif selon l'une des revendications 1 à 9, **caractérisé par** des moyens destinés à supprimer la fonction de l'interrupteur (9).

11. Dispositif selon la revendication 10, **caractérisé en ce que** les moyens destinés à supprimer la fonction de l'interrupteur (9) comportent une touche destinée à être manoeuvrée à la main.

12. Dispositif selon l'une des revendications 1 à 11, qui est configuré de façon que le démarrage automatique de l'opération d'épissage s'effectue par l'intermédiaire de l'interrupteur (9).

13. Dispositif selon l'une des revendications 1 à 12, qui est configuré de telle sorte que, lors du déplacement du capot (7), l'interrupteur (9) se ferme, et que, sous l'effet de la manoeuvre de l'interrupteur (9), l'opération d'épissage commence automatiquement.

14. Dispositif selon l'une des revendications 1 à 13, qui est configuré de telle sorte que le déplacement du capot (7) de la première position à la deuxième position mette fin à l'opération d'épissage.

15. Dispositif selon l'une des revendications 1 à 14, qui est configuré de telle sorte que ce soit seulement sous l'effet du déplacement du capot qu'il se crée une connexion et une déconnexion automatiques des moyens destinés à relier les guides d'ondes optiques dans la zone du point d'assemblage.
